# EUROPÄISCHE PATENTSCHRIFT

(11) **EP 0 650 802 B1**
(45) Veröffentlichungstag und Bekanntmachung des Hinweises auf die Patenterteilung: **29.04.1998**
(21) Anmeldenummer: 94115084.9
(22) Anmeldetag: 24.09.1994
(51) Int. Cl.: B23Q 11/02, B23D 55/10

(54) **Bandsäge, insbesondere Fleischereibandsäge**
Strap blade saw, particularly butcher strap blade saw
Scie à ruban, en particulier scie à ruban pour boucherie

(30) Priorität: 29.09.1993 DE 9314703 U
(43) Veröffentlichungstag der Anmeldung: 03.05.1995
(73) Patentinhaber: Bizerba GmbH & Co. KG, D-72336 Balingen (DE)
(72) Erfinder: Bässler, Roland, D-72336 Balingen (DE); Thäsler, Manfred, D-72336 Balingen (DE)
(74) Vertreter: Hoeger, Stellrecht & Partner

(56) Entgegenhaltungen:
- EP-A- 0 040 545
- DE-A- 2 802 743
- DE-A- 3 916 336
- DE-U- 8 227 176
- US-A- 3 295 400

## Beschreibung

Die Erfindung betrifft eine Bandsäge, insbesondere eine Fleischereibandsäge, mit einem Unterbau mit Sägetisch, einem Antriebsmotor mit unterem Antriebsrad, Schmutzabstreifern für das umlaufende, bandförmige Sägeblatt und das Antriebsrad, einer Sägeblatt-Spann- und Entspannvorrichtung sowie einer Säule und einem sich dieser nach oben anschließenden Sägekopf, in dem ein oberes Umlenkrad gelagert ist. Die Sägeblatt-Spann- und Entspannvorrichtung ist mit einer Schmutzabstreifer-Abhebe- und Anstellvorrichtung so gekoppelt, daß beide gemeinsam mit einem einzigen Betätigungshebel bedienbar sind. Eine solche Bandsäge ist aus der DE 3916336A1 bekannt.

Die hierbei verwendeten bekannten Schmutzabstreif-Vorrichtungen dienen dazu, das beim Sägen insbesondere von Fleisch und Knochen entstehende, mit Fett vermengte Sägemehl sowohl von dem umlaufenden Sägeblatt als auch insbesondere von dem unteren Antriebsrad für das Sägeblatt abzustreifen und in einem Auffangbehälter zu sammeln. Hierdurch wird verhindert, daß das Schneidgut durch mit dem Sägeblatt umlaufendes Sägemehl samt Fett verunreinigt wird, so daß die Sägezähne bzw. die Lücken zwischen diesen frei bleiben und einen einwandfreien Schnitt ergeben und daß eine schlupffreie Antriebsverbindung zwischen Antriebsrad und Sägeblatt gewährleistet ist.

Zweck der Sägeblatt-Spann- und Entspannvorrichtung ist es, das bandförmige Sägeblatt während des Sägens in gespanntem Zustand zu halten und für den Sägebandwechsel zum Abnehmen von der Antriebs- und Umlenkrolle zu entspannen.

An gattungsgemäßen Bandsägen sind verschiedene Konstruktionen von Abstreifern bekannt, die in meist paarweise keilförmiger Anordnung an dem Bandsägeblatt (vgl. z.B. US 3,295,400 oder EP 0 040 545 A2) bzw. einzeln federbelastet an dem Antriebsrad anliegen und zum Reinigen oder Ersetzen mehr oder weniger umständlich, oft mit Handwerkzeugen gelöst und entfernt und wieder montiert werden müssen. Auch ist eine Vorrichtung bekannt, bei der die Abstreifer paarweise durch einen Drehgriff mit Knebel in eine vom Bandsägeblatt losgelöste Stellung gebracht werden können (Katalogblatt 18/11 der Anmelderin). Hierbei liegen die diese Abstreifer beaufschlagenden Federelemente im Bereich des größten Schmutzanfalls.

Ebenso sind separate Sägeblattabhebe- und Spann-Vorrichtungen an Bandsägen bekannt, bei denen entweder das obere Umlenkrad (vgl. z.B. G 84 08 799.4 oder G 82 27 176.3) oder auch entsprechend das untere Antriebsrad samt Antriebsmotor durch hebelbediente, federbelastete Hubeinrichtungen ent- oder gespannt werden, um das Sägeblatt von den Antriebs- und Umlenkrädern abnehmen, reinigen und wieder aufsetzen zu können.

Das zumindest tägliche Reinigen oder der Austausch bzw. Ersatz des Sägeblattes und/oder der Abstreifer erfordert bei den bisher bekannten Lösungen zunächst entweder das Entfernen des Sägeblattes aus dem Bereich der federnd anliegenden Abstreifer, oder das Entfernen der Abstreifer aus dem Bereich des Sägeblattes, wobei die Abstreifer meist aus mehreren, zusammengesetzten oder z.B. teilweise verschraubten Einzelteilen bestehen, deren Demontage und teilweises Zerlegen durch Lösen von Befestigungselementen umständlich, zeitraubend und mit nicht unerheblichem Verletzungsrisiko verbunden ist. Dasselbe gilt natürlich auch für das Wiedereinsetzen und -bestücken des Sägeblattes bzw. der Abstreifer nach dem Reinigen.

Das Reinigen selbst ist im Hinblick darauf, daß die die Abstreifer beaufschlagenden Federelemente im Bereich des größten Schmutzanfalls liegen sowie wegen der sonstigen baulichen Gegebenheiten (wie z.B. viele Einzelteile, tote Winkel und Schmutzecken) ebenfalls relativ umständlich und wird den heutigen hygienischen Anforderungen nur bedingt gerecht.

Es ist Aufgabe der Erfindung, die geschilderten Nachteile zu beheben, insbesondere einen leichten, schnellen Aus- und Einbau von Sägeblatt und Abstreifern zu erreichen, d.h. eine gegenüber dem Stand der Technik leichtere Bedienbarkeit, sowie die Reinigungs- und Wartungsmöglichkeiten zu verbessern sowie die Verletzungsgefahr weiter zu vermindern.

Diese Aufgabe wird erfindungsgemäß dadurch gelöst, daß die Schmutzabstreifer-Abhebe- und Anstellvorrichtung Mitnehmerelemente, die dem dem Sägeblatt zugeordneten Abstreifer und dem Radabstreifer zugeordnet sind, umfaßt und daß die Mitnehmerelemente auf einer plattenförmigen Traverse der Schmutzabstreifer-Abhebe- und Anstellvorrichtung angeordnet sind, wobei die plattenförmige Traverse der Schmutzabstreifer-Abhebe- und Anstellvorrichtung mit dem Motorlagerschild verbunden ist.

Die Kopplung zwischen der Abhebe- und Anstellvorrichtung einerseits und der Sägeblatt-Spann- und Entspannvorrichtung andererseits geschieht vorzugsweise durch eine form- und/oder kraftschlüssige Verbindung. Die Abhebe- und Anstellvorrichtung selbst weist die Form einer plattenförmigen Traverse auf, welche Mitnehmerstifte aufweist, welche sämtliche Abstreifer gleichzeitig betätigen können.

Eine bevorzugte Bandsäge, insbesondere eine Fleischereibandsäge, besteht im wesentlichen aus einem Unterbau mit Sägetisch, einem Antriebsmotor mit unterem Antriebsrad, Schmutzabstreifern für das umlaufende, bandförmige Sägeblatt und das Antriebsrad, sowie einer Sägeblatt-Spann- und Entspannvorrichtung, mit der der Antriebsmotor samt Antriebsrad und Motor-Lagerschild mittels eines Hebels und eines Exzenters eine vertikale Hubbewegung ausführt, ferner einer Säule und einem sich nach oben anschließenden Sägekopf, in dem das obere Umlenkrad für das Sägeblatt gelagert ist, wobei die in der Vorderwand des Unterbaus gelagerten Sägeblatt-Abstreifer und Radabstreifer durch diesen zugeordnete Mitnehmerstifte, die auf einer Abhebe- und Anstellvorrichtung in Form einer plattenförmigen Traverse angeordnet sind, betätigt werden und wobei die Abhebe- und Anstellvorrichtung und die Sägeblatt-Spann- und Entspannvorrichtung form- und kraftschlüssig zu einer kombinierten Vorrichtung vereinigt sind, die mit dem Betätigungshebel der Sägeblatt-Spann- und Entspannvorrichtung gleichzeitig bedient wird.

Eine weiter bevorzugte Ausführungsform der erfindungsgemäßen Bandsäge zeichnet sich dadurch aus, daß die plattenförmige Traverse der Schmutzabstreifer-Abhebe- und Anstellvorrichtung mittels Schrauben mit dem Motorlagerschild verbunden ist oder die Traverse und das Motorlagerschild aus einem Stück bestehen.

Bevorzugt ist vorgesehen, daß mindestens je ein Sägeblatt-Abstreifer für jede Seite des Sägeblattes und mindestens ein Radabstreifer vorhanden sind.

Ferner ist vorteilhaft, wenn Sägeblatt-Abstreifer und Radabstreifer mit ihren mit beidseitig abgeflachten Bohrungen versehenen Naben auf den entsprechend beidseitig abgeflachten Lager-Bundbolzen formschlüssig und damit verdrehfest aufgesteckt sind, wobei die Lager in axialer Richtung durch leicht lösbare Rastverbindungen gesichert sind.

Dabei kann vorgesehen sein, daß die Lager-Bundbolzen jeweils in Kunststoff-Lagerbuchsen gelagert sind, wobei in einer Bohrung am hinteren Ende der Lager-Bundbolzen jeweils ein Mitnehmerhebel befestigt ist, der gleichzeitig zur axialen Fixierung des Lager-Bundbolzens dient, wobei an dem Mitnehmerhebel eine Zugfeder mit einem Ende eingehängt und mit dem anderen Ende an dem an der Vorderwand angebrachten Stehbolzen befestigt ist.

Bei einer bevorzugten Ausführungsform liegen die Kunststoff-Lagerbuchsen mit ihrem jeweiligen Bund an der Vorderseite der Vorderwand des Unterbaus an und sind durch ein in eine Nut der Lagerbuchse eingreifendes U-förmiges Blech, das sich über jeweils zwei Abdrück-Gewindestifte gegen die Rückseite der Vorderwand abstützt, axial befestigt und gesichert.

An den Sägeblatt-Abstreifern sind vorzugsweise Abstreiferlippen vorhanden, die bezogen auf die Längsrichtung des umlaufenden Sägeblattes in einem Winkelbereich von α = 40 bis 70° schräggestellt sind.

Weiter bevorzugt beträgt der Winkel α ca. 55°.

Bei bevorzugten Konstruktionen ist vorgesehen, daß durch das Umlegen des Betätigungshebels gegen den Uhrzeigersinn und das hierdurch bewirkte gleichzeitige Abheben der Abstreifer das Sägeblatt vom Antriebsrad und vom Umlenkrad gelöst und abnehmbar sowie die Abstreifer von dem Lager-Bundbolzen abziehbar sind.

Schließlich zeichnen sich bevorzugte erfindungsgemäße Bandsägen dadurch aus, daß durch das Umlegen des Betätigungshebels im Uhrzeigersinn das Sägeblatt gespannt und gleichzeitig die Abstreifer an das Sägeblatt bzw. an das Antriebsrad mit einer den Zugfedern entsprechenden Vorspannung federnd angelegt werden.

Weitere Ausgestaltungen der Erfindung sind in den Unteransprüchen festgelegt.

Durch die erfindungsgemäße Vorrichtung wird erreicht, daß zum Reinigen und zum Austausch des Sägeblattes und/oder der Abstreifer mit einer einzigen Hebelbewegung gleichzeitig die Abstreifer vom Sägeblatt bzw. vom Antriebsrad abgehoben werden und das Sägeblatt entspannt wird, so daß das Sägeblatt und/oder die Abstreifer leicht abgenommen oder umgekehrt leicht und schnell angebracht werden können. Das Abnehmen oder Anbringen der Abstreifer wird noch dadurch erleichtert, daß sie auf die mit Mitnehmern versehenen Lagerzapfen mit Rasteinrichtung leicht und rasch aufsteckbar bzw. von diesen abziehbar sind, so daß die Bedienungsperson mit dem Sägeblatt nicht in Berührung kommt und sich dadurch nicht verletzen kann.

Sämtliche relevanten Bauteile sind aufgrund ihrer Gestaltung und Anordnung besser und schneller zu reinigen.

Insbesondere durch die Anordnung der nicht aktiven Teile der Vorrichtung außerhalb des Schmutzbereichs wird ferner erreicht, daß diese Teile reinigungs- bzw. wartungsfrei sind, zudem der Schmutzbereich weniger Teile enthält und demzufolge ebenfalls leichter gereinigt werden kann.

Den Gesichtspunkten berufsgenossenschaftlicher Unfallverhütungsvorschriften und den modernen Hygiene-Anforderungen wird daher besser entsprochen, ebenso den Forderungen nach rationeller Bedienbarkeit und Servicefreundlichkeit.

Ein Ausführungsbeispiel der Erfindung ist in der Zeichnung dargestellt und wird im folgenden näher beschrieben. Es zeigen:
- Figur 1: eine schematisierte Vorderansicht einer erfindungsgemäßen Bandsäge mit der Anordnung der Schmutzabstreifer im Unterbau;
- Figur 2: eine Seitenansicht der Bandsäge gemäß Figur 1;
- Figur 3: eine vergrößerte Ansicht des Unterbaus der Bandsäge gemäß Figur 1 mit der erfindungsgemäßen Sägeblatt- und Abstreifer-Betätigungsvorrichtung;
- Figur 4: einen detaillierten vergrößerten Ausschnitt des linken Teils der Abstreifer-Betätigungsvorrichtung gemäß Figur 3;
- Figur 5: einen Axial-Schnitt A - B gemäß Figur 4;
- Figur 5a: einen Teilschnitt C - D gemäß Figur 5; und
- Figur 6: einen detaillierten, vergrößerten Ausschnitt des rechten Teils der Abstreifer-Betätigungsvorrichtung.

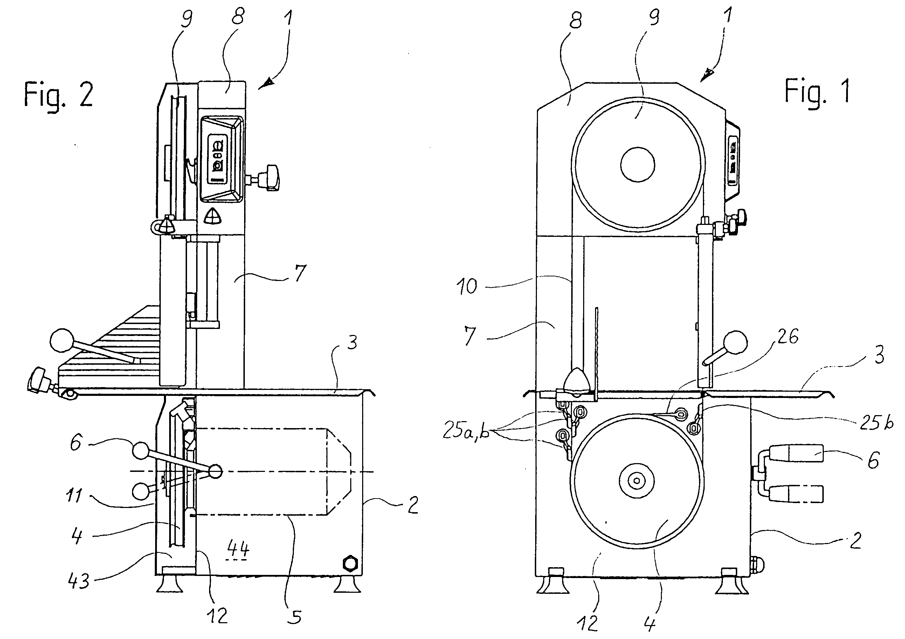

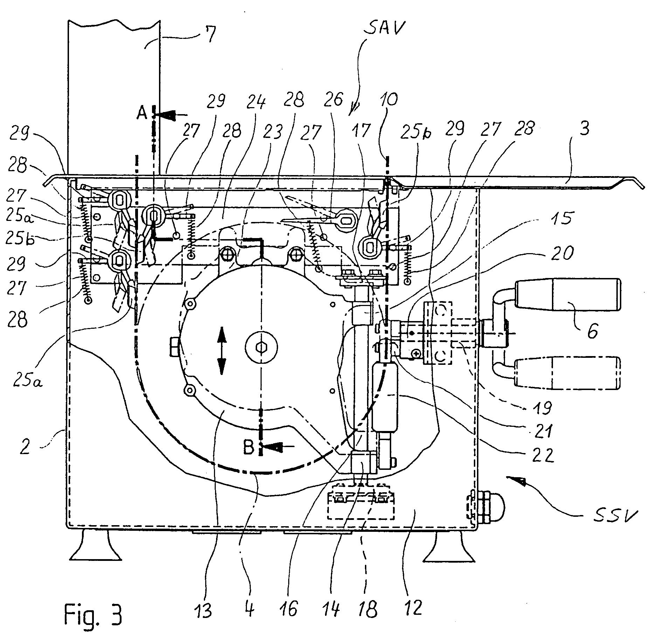

Die in den Figuren 1 und 2 dargestellte Bandsäge 1 umfaßt in bekannter Weise einen Unterbau 2 mit Sägetisch 3, ein im Unterbau 2 gelagertes, durch einen nur schematisch dargestellten Motor 5 angetriebenes, nur mit seiner Umfangslinie angedeutetes Antriebsrad 4, einen Betätigungshebel 6 für die Sägeblatt- und Abstreifer-Betätigungsvorrichtung gemäß Figur 3, eine Säule 7 und einen oberen Sägenkopf 8 mit daran gelagertem oberem Umlenkrad 9 für das bandförmige Sägeblatt 10.

In der Figur 3 ist der Unterbau der Bandsäge 1 mit der Sägeblatt-Spann- und Entspannvorrichtung SSV und der Abstreifer-Abhebe- und Anstellvorrichtung SAV in gespannter Lage dargestellt, wobei die Tür 11 ganz entfernt und die Vorderwand 12 des Unterbaus 2 aufgebrochen abgebildet ist.

Das antriebsseitige Motor-Lagerschild 13 des Motors 5 ist mit 2 Führungslagern 14, 15 an einem vertikalen Gestänge 16 höhenverstellbar gelagert, wobei das Gestän- 16 über eine obere und eine untere Lagerplatte 17, 18 an der nur teilweise dargestellten Vorderwand 12 befestigt ist.

An den oberen beiden Befestigungsaugen 23 des Motorlagerschilds 13 ist eine plattenförmige Traverse 24 z.B. durch Schrauben 45 befestigt, auf der z.B. fünf, den an der Vorderwand 12 des Unterbaus 2 gelagerten Sägeblatt-Abstreifern 25a, b bzw. dem Radabstreifer 26 zugeordnete Mitnehmerstiffe 27 angeordnet sind. Traverse 24 und Motorlagerschild 13 können auch aus einem Stück bestehen.

Durch Verschwenken des Betätigungshebels 6 im Gegenuhrzeigersinn wird über einen auf der Hebelachse 19 angebrachten Exzenter 20 mit einem Lagerzapfen 21, in dem der obere Anlenkpunkt der Druckfeder 22, z.B. eine Spiralfeder oder eine Gasdruckfeder, angelenkt ist, das Motor-Lagerschild 13 aus seiner gezeichneten unteren Lage gegen den Druck der Feder 22 in seine obere, strichpunktiert gezeichnete Lage angehoben. Dadurch wird das ursprünglich gespannte Sägeblatt 10 entspannt.

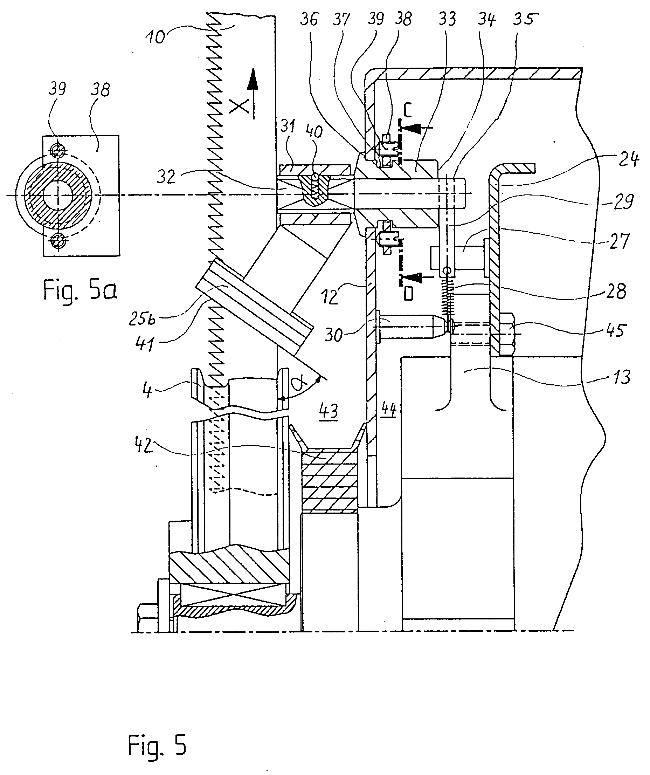

Bei der Hubbewegung des Motors 5 samt Motor-Lagerschild 13 und Traverse 24 nach oben werden die Sägeblatt- und der Radabstreifer 25a, b bzw. 26 über die diesen jeweils zugeordneten Mitnehmerstifte 27, die an den durch Zugfedern 28 belastete Mitnehmerhebel 29 der Sägeblatt-Abstreifer 25a, b bzw. am Radabstreifer 26 direkt angreifen, derart verschwenkt, daß sie vom Sägeblatt 10 bzw. vom Antriebsrad 4 gegen den Zug der Federn 28 abgehoben werden. Die Federn 28 sind einerseits an den Mitnehmerhebel 29 und andererseits an auf der Rückseite der Vorderwand 12 angeschweißten Stehbolzen 30 eingehängt (Fig. 5).

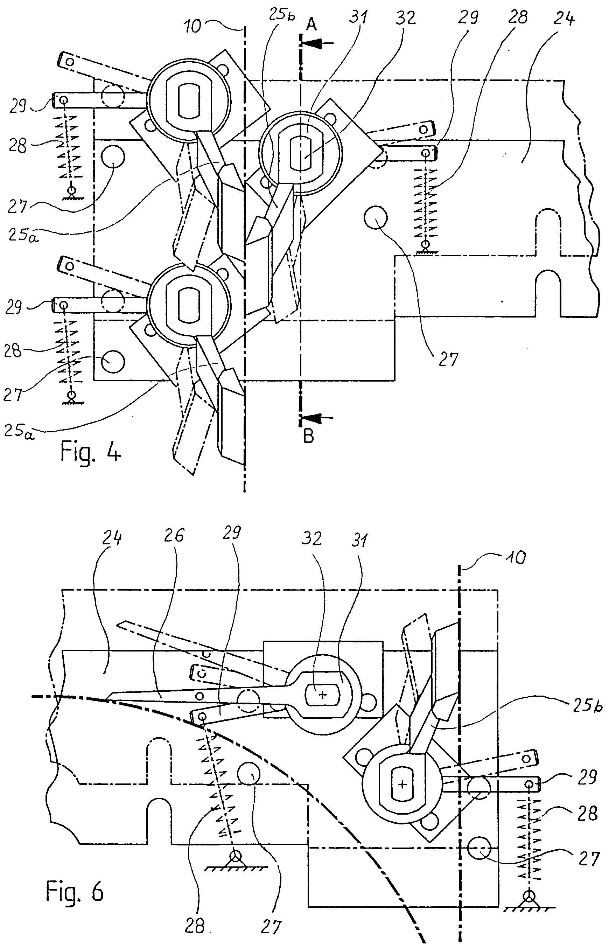

Aus den Figuren 4, 5 und 6 ist ersichtlich, daß die nicht aktiven Einzelteile (Feder 28, Mitnehmerhebel 29, Stehbolzen 30) der Sägeblatt-Abstreifer 25a, b und des Radabstreifers 26 nicht im Späneraum 43, sondern außerhalb des Schmutzbereichs, d.h. im Motorraum 44, untergebracht sind und somit den Reinigungsvorgang im Späneraum 43 wesentlich vereinfachen.

Der Motorraum 44 ist im Bereich des vertikal beweglichen Motor-Lagerschildes 13 und des Antriebsrades 4 zusätzlich mit einer Dichtung 42 gegen den Späneraum 43 abgedichtet.

Die Sägeblatt-Abstreifer 25a, b und der Radabstreifer 26 sind mit ihren Naben 31 auf den beidseitig abgeflachten Lager-Bundbolzen 32 formschlüssig und damit verdrehfest gesichert. In axialer Richtung werden sie in ihrer gezeichneten Arbeitsstellung mittels Rastverbindung 40, welche z.B. als Kugelraste oder Schnapphakenverbindung ausgebildet sein kann, lösbar auf die Lager-Bundbolzen 32 aufgeschoben und sind demzufolge im vom Sägeblatt 10 abgehobenen Zustand leicht abnehmbar.

Die Lager-Bundbolzen 32 sind jeweils in einer Kunststoff-Lagerbuchse 33 drehbar gelagert. An ihrem hinteren Ende 34 ist jeweils in einer Bohrung 35 einer der Mitnehmerhebel 29 befestigt, der gleichzeitig zur axialen Fixierung des Lager-Bundbolzen 32 in der Lagerbuchse 33 dient. Letztere wiederum liegt mittels eines Bundes 36 an der Vorderseite der Vorderwand 12 des Unterbaus 2 an und ist durch ein in eine Nut 37 der Lagerbuchse 33 eingreifendes U-förmiges Blech 38, das sich über jeweils zwei Abdrück-Gewindestifte 39 gegen die Rückseite der Vorderwand 12 abstützt, axial befestigt und gesichert (Figur 5a).

Die Anzahl der Abstreifer beträgt im dargestellten Ausführungsbeispiel vorteilhafterweise insgesamt fünf, d.h. je zwei Abstreifer 25a und b für jede Seite des Sägeblatts 10 und mindestens einen Radabstreifer 26.

Es ist aber auch eine größere oder geringe Anzahl von Sägeblatt-Abstreifern 25a, b denkbar.

Die Sägeblatt-Abstreifer 25a bzw. 25b sind bezüglich ihrer Form und der Anordnung der Abstreiflippen 41 zur Längsachse des Sägeblattes 10 spiegelbildlich ausgebildet (Figur 4). Die Abstreiflippen 41 sind, bezogen auf die Längsrichtung X des umlaufenden Sägeblattes 10, in einem Winkel α von 40 bis 70, vorzugsweise ca. 55° schräggestellt. Die Abstreifer 25a, b bzw. 26 sind vorzugsweise aus Kunststoff gefertigt. Zudem kann die Anordnung der Abstreifer 25a, b bzw. 26 zueinander bzw. zum Sägeblatt 10 variieren.

Die abgestreiften Späne fallen in einen üblicherweise im Unterteil der Tür 11 angebrachten, nicht dargestellten Auffangbehälter.

Durch das Entspannen des Sägeblattes 10 mittels Umlegen des Betätigungshebels 6 gegen den Uhrzeigersinn und das hierdurch bewirkte gleichzeitige Abheben der Abstreifer 25a, b und 26 läßt sich das Sägeblatt 10 leicht vom Antriebsrad 4 und vom Umlenkrad 9 lösen und abnehmen und die Abstreifer 25a, b und 26 abziehen.

Umgekehrt lassen sich die Abstreifer 25a, b und 26 z.B. nach dem Reinigen ebenso leicht wieder auf die Lager-Dorne 32 aufstecken und verrasten, bevor das Sägeblatt 10 wieder lose auf die Räder 4 und 9 aufgezogen wird.

Durch Umlegen des Betätigungshebels 6 im Uhrzeigersinn wird das Sägeblatt 10 wieder gespannt und gleichzeitig werden die Abstreifer 25a, b und 26 wieder an das Sägeblatt 10 bzw. an das Antriebsrad 4 mit einer den Zugfedern entsprechenden Vorspannung federnd angelegt.

## Patentansprüche

1. Bandsäge(1), insbesondere eine Fleischereibandsäge, mit einem Unterbau (2) mit Sägetisch(3), einem Antriebsmotor (5) mit unterem Antriebsrad (4), Schmutzabstreifern für das umlaufende, bandförmige Sägeblatt (10) und das Antriebsrad (4), sowie einer Sägeblatt-Spann- und Entspannvorrichtung (SSV), mit der der Antriebsmotor (5) samt Antriebsrad (4) und Motor-Lagerschild (13) in vertikaler Richtung bewegbar sind, sowie mit einer Säule (7) und einem sich dieser oben anschließenden Sägekopf (8), an dem das obere Umlenkrad (9) für das Sägeblatt (10) gelagert ist, wobei die Sägeblatt-Spann- und Entspannvorrichtung (SSV) und eine Schmutzabstreifer-Abhebe- und Anstellvorrichtung (SAV) miteinander so gekoppelt sind, daß sie mit einem einzigen Betätigungshebel (6) der Sägeblatt-Spann- und Entspannvorrichtung (SSV) gemeinsam bedienbar sind, **dadurch gekennzeichnet**, daß die Schmutzabstreifer-Abhebe- und Anstellvorrichtung (SAV) Mitnehmerelemente (27), die dem dem Sägeblatt (10) zugeordneten Abstreifer (25a, b) und dem Radabstreifer (26) zugeordnet sind, umfaßt und daß die Mitnehmerelemente (27) auf einer plattenförmigen Traverse (24) der Schmutzabstreifer-Abhebe- und Anstellvorrichtung (SAV) angeordnet sind, wobei die plattenförmige Traverse (24) der Schmutzabstreifer-Abhebe- und Anstellvorrichtung (SAV) mit dem Motorlagerschild (13) verbunden ist.

2. Bandsäge nach Anspruch 1, **dadurch gekennzeichnet**, daß die Traverse (24) und das Motorlagerschild (13) einstückig ausgebildet sind.

3. Bandsäge nach einem der Ansprüche 1 oder 2, **dadurch gekennzeichnet**, daß mindestens je ein Sägeblatt-Abstreifer (25a, b) für jede Seite des Sägeblattes (10) vorgesehen sind.

4. Bandsäge nach einem der Ansprüche 1 bis 3, **dadurch gekennzeichnet**, daß die Sägeblatt-Abstreifer (25a, b) und der Radabstreifer (26) mit ihren mit beidseitig abgeflachten Bohrungen versehenen Naben (31) auf einen entsprechend beidseitig abgeflachten Lagerbolzen (32) formschlüssig und damit verdrehfest aufgesteckt sind, wobei die Lager in axialer Richtung durch leicht lösbare Rastverbindungen (40) gesichert sind.

5. Bandsäge nach Anspruch 4, **dadurch gekennzeichnet**, daß die Lagerbolzen (32) Lagerbundbolzen sind.

6. Bandsäge nach einem der Ansprüche 1 bis 5, **dadurch gekennzeichnet**, daß die Lagerbolzen (32) jeweils in Kunststoff-Lagerbuchsen (33) gelagert sind, wobei in einer Bohrung (35) am hinteren Ende (34) der Lagerbolzen (32) jeweils ein Mitnehmerhebel (29) befestigt ist, der gleichzeitig zur axialen Fixierung des Lagerbolzens (32) dient, wobei die Mitnehmerhebel (29) federbelastet sind.

7. Bandsäge nach Anspruch 6, **dadurch gekennzeichnet**, daß die Kunststoff-Lagerbuchsen (33) mit ihrem jeweiligen Bund (36) an der Vorderseite einer Vorderwand (12) des Unterbaus (2) anliegen und durch ein in eine Nut (37) der Lagerbuchse (33) eingreifendes U-förmiges Blech (38), das sich über jeweils zwei Abdrück-Gewindestifte (39) gegen die Rückseite der Vorderwand (12) abstützt, axial befestigt und gesichert sind.

8. Bandsäge nach einem der Ansprüche 1 bis 7, **dadurch gekennzeichnet**, daß an den Sägeblatt-Abstreifern (25a, b) Abstreiferlippen (41) vorhanden sind, die bezogen auf die Längsrichtung (X) des umlaufenden Sägeblattes (10), in einem Winkelbereich von α = 40 bis 70° schräggestellt sind.

9. Bandsäge nach einem der Ansprüche 1 bis 8, **dadurch gekennzeichnet**, daß an den Sägeblatt-Abstreifern (25a, b) Abstreiferlippen (41) vorhanden sind, die bezogen auf die Längsrichtung (X) des umlaufenden Sägeblattes (10), in einem Winkel von α = 55° schräggestellt sind.

10. Bandsäge nach einem der Ansprüche 5 bis 9, **dadurch gekennzeichnet**, daß durch ein Umlegen des Betätigungshebels (6) gegen den Uhrzeigersinn und das hierdurch bewirkte gleichzeitige Abheben der Abstreifer (25a, b; 26) das Sägeblatt (10) vom Antriebsrad (4) und vom Umlenkrad (9) gelöst und abnehmbar, sowie die Abstreifer (25a, b; 26) von dem Lagerbolzen (32) abziehbar sind.

11. Bandsäge nach einem der Ansprüche 1 bis 8, **dadurch gekennzeichnet**, daß durch das Umlegen des Betätigungshebels (6) im Uhrzeigersinn das Sägeblatt (10) gespannt und gleichzeitig die Abstreifer (25a, b; 26) an das Sägeblatt (10) bzw. an das Antriebsrad (4) mit einer den Zugfedern (28) entsprechenden Vorspannung federnd angelegt werden.

## Claims

1. A band saw (1), in particular a butcher's band saw, having a substructure (2) with a sawing table (3), a driving motor (5) with lower driving wheel (4), waste strippers for the rotating band-shaped saw blade (10) and the driving wheel (4), and also a saw blade clamping and unclamping device (SSV), with which the driving motor (5) together with driving wheel (4) and motor bearing bracket (13) can be moved in the vertical direction, and also with a column (7) and a saw head (8) attached to the top of said column, on which the upper deflection wheel (9) for the saw blade (10) is mounted, with the saw blade clamping and unclamping device (SSV) and a waste stripper lifting and adjustment device (SAV) being coupled to one another in such a manner that they can be jointly operated with a single operating lever (6) of the saw blade clamping and unclamping device (SSV),
**characterised in that** the waste stripper lifting and adjustment device (SAV) comprises driving elements (27), which are associated with the stripper (25a, b) associated with the saw blade (10) and with the wheel stripper (26),
**and in that** the driving elements (27) are disposed on a plate-shaped crosshead (24) of the waste stripper lifting and adjustment device (SAV), with the plate-shaped crosshead (24) of the waste stripper lifting and adjustment device (SAV) being connected to the motor bearing bracket (13).

2. A band saw according to Claim 1,
**characterised in that** the crosshead (24) and the motor bearing bracket (13) are constructed in one piece.

3. A band saw according to one of Claims 1 or 2,
**characterised in that** at least one saw blade stripper (25a, b) is provided for each side of the saw blade (10).

4. A band saw according to one of Claims 1 to 3,
**characterised in that** the saw blade strippers (25a, b) and the wheel stripper (26) are placed by their hubs (31), provided with bores flattened on either side, in a form-fit and consequently torsion-free manner on a bearing pin (32), correspondingly flattened on either side, with the bearings being secured in the axial direction by easily detachable catch connections (40).

5. A band saw according to Claim 4,
**characterised in that** the bearing pins (32) are bearing flange pins.

6. A band saw according to one of Claims 1 to 5,
**characterised in that** the bearing pins (32) are in each case mounted in plastics bearing bushes (33), with a driving lever (29) in each case being fixed in a bore (35) at the rear end (34) of the bearing pins (32), which lever at the same time serves to axially fix the bearing pin (32), with the driving levers (29) being spring loaded.

7. A band saw according to Claim 6,
**characterised in that** the plastics bearing bushes (33) abut the front side of a front wall (12) of the substructure (2) by their respective shoulders (36) and are axially fixed and secured by a U-shaped sheet (38) engaging in a groove (37) of the bearing bush (33), which sheet is supported via two forcing set screws (39) against the rear of the front wall (12).

8. A band saw according to one of Claims 1 to 7,
**characterised in that** stripper lips (41), which, in relation to the longitudinal direction (X) of the rotating saw blade (10), are inclined in an angular range of α = 40 to 70°, are provided on the saw blade strippers (25a, b).

9. A band saw according to one of Claims 1 to 8,
**characterised in that** stripper lips (41), which, in relation to the longitudinal direction (X) of the rotating saw blade (10), are inclined at an angle of α = 55°, are provided on the saw blade strippers (25a, b).

10. A band saw according to one of Claims 5 to 9,
**characterised in that** by moving the operating lever (6) in the anti-clockwise direction and the raising of the strippers (25a, b; 26) simultaneously effected hereby, the saw blade (10) is released and can be removed from the driving wheel (4) and from the deflection wheel (9), and also the strippers (25a, b; 26) can be pulled off the bearing pin (32).

11. A band saw according to one of Claims 1 to 8,
**characterised in that** by moving the operating lever (6) in the clockwise direction the saw blade (10) is clamped and at the same time the strippers (25a, b; 26) are resiliently placed against the saw blade (10) and respectively against the driving wheel (4) with a bias corresponding to the tension springs (28).

## Revendications

1. Scie à ruban (1), en particulier scie à ruban de boucherie, comportant un châssis (2) avec table de sciage (3), un moteur d'entraînement (5) avec une roue d'entraînement (4) inférieure, des racleurs de déchets pour la lame de scie (10) en ruban en circulation et pour la roue d'entraînement (4) ainsi qu'un dispositif de tension et de détente de la lame de scie (SSV) en association auquel le moteur d'entraînement (5) y compris la roue d'entraînement (4) et le flasque (13) de moteur sont susceptibles d'être déplacés en direction verticale, ainsi qu'avec une colonne (7) et une tête de scie (8) se raccordant en haut de cette dernière, sur laquelle est montée la roue de renvoi (9) supérieure pour la lame de scie (10), le dispositif de tension et de détente de la lame de scie (SSV) et un dispositif de soulèvement et de rapprochement des racleurs de déchets (SAV) sont accouplés l'un à l'autre de telle sorte qu'ils sont susceptibles d'être commandés en même temps avec un seul levier d'actionnement (6) du dispositif de tension et de détente de la lame de scie (SSV), caractérisée en ce que le dispositif de soulèvement et de rapprochement des racleurs de déchets (SAV) comprend des éléments d'entraînement (27) qui sont associés au racleur (25a, b) associé à la lame de scie (10) et au racleur de la roue (26) et en ce que les éléments d'entraînement (27) sont agencés sur une traverse (24) en forme de plaque du dispositif de soulèvement et de rapprochement des racleurs de déchets (SAV), la traverse (24) en forme de plaque du dispositif de soulèvement et de rapprochement des racleurs de déchets (SAV) étant reliée au flasque (13) du moteur.

2. Scie à ruban selon la revendication 1, caractérisée en ce que la traverse (24) et le flasque (13) du moteur sont réalisés en une seule pièce.

3. Scie à ruban selon l'une ou l'autre des revendications 1 et 2, caractérisée en ce qu'au moins un racleur (25a, b) respectif de lame de scie est prévu pour chaque côté de la lame de scie (10).

4. Scie à ruban selon l'une quelconque des revendications 1 à 3, caractérisée en ce que les racleurs (25a, b) de lame de scie et le racleur (26) de roue sont enfichés avec leurs moyeux (31) pourvus de chaque côté de perçages aplatis, sur un boulon de montage aplati de manière correspondante de chaque côté, par coopération de formes et par conséquent solidaires en rotation, les paliers étant assurés en direction axiale par des liaisons à enclenchement (40) facilement détachables.

5. Scie à ruban selon la revendication 4, caractérisée en ce que les boulons de montage (32) sont des boulons de montage à collet.

6. Scie à ruban selon l'une quelconque des revendications 1 à 5, caractérisée en ce que les boulons de montage (32) respectifs sont montés dans des coussinets (33) en matière plastique, un levier d'entraînement respectif (29) étant fixé dans un perçage (35) à l'extrémité postérieure (34) des boulons de montage (32), lequel sert en même temps à fixer axialement le boulon de montage (32), les leviers d'entraînement (29) étant chargés par ressorts.

7. Scie à ruban selon la revendication 6, caractérisée en ce que les coussinets (33) en matière plastique reposent avec leur collerette (36) respective sur la face antérieure d'une paroi antérieure (12) du châssis (2) et sont fixés axialement et assurés par une tôle (38) en forme de U s'engageant dans une gorge (37) du coussinet (33), ladite tôle prenant appui sur la face postérieure de la paroi antérieure (12) par l'intermédiaire de deux tiges-poussoirs filetées (39).

8. Scie à ruban selon l'une quelconque des revendications 1 à 7, caractérisée en ce que sur les racleurs (25a, b) de la lame de scie se trouvent des lèvres de raclage (41) qui sont inclinées dans une plage angulaire de α = 40 à 70° par rapport à la direction longitudinale (X) de la lame de scie (10) en circulation.

9. Scie à ruban selon l'une quelconque des revendications 1 à 8, caractérisée en ce que sur les racleurs (25a, b) de la lame de scie se trouvent des lèvres de raclage (41) qui sont inclinées dans une plage angulaire de α = 55° par rapport à la direction longitudinale (X) de la lame de scie (10) en circulation.

10. Scie à ruban selon l'une quelconque des revendications 5 à 9, caractérisée en ce qu'en renversant le levier d'actionnement (6) dans le sens contraire aux aiguilles d'une montre et par le soulèvement simultané des racleurs (25a, b, 26), qui en découle, la lame de la scie (10) est détachée de la roue d'entraînement (4) et de la roue de renvoi (9) et est susceptible d'être enlevée, et en ce que les racleurs (25a, b, 26) peuvent être retirés du boulon de montage (32).

11. Scie à ruban selon l'une quelconque des revendications 1 à 8, caractérisée en ce qu'en renversant le levier d'actionnement (6) dans le sens des aiguilles d'une montre, la lame de scie (10) est tendue et simultanément, les racleurs (25a, b, 26) sont mis en contact de manière élastique contre la lame de scie (10) ou sur la roue d'entraînement, respectivement, avec une prétension correspondant aux ressorts de traction (28).
